# EUROPÄISCHE PATENTSCHRIFT

(11) **EP 3 132 880 B1**
(45) Veröffentlichungstag und Bekanntmachung des Hinweises auf die Patenterteilung: **13.07.2022**
(21) Anmeldenummer: 16183325.6
(22) Anmeldetag: 09.08.2016
(51) Int. Cl.: B23K 11/093, F01N 13/00, F16B 37/06

(54) **BEFESTIGUNGSVERFAHREN FÜR EINE BUCHSE**
FASTENING METHOD FOR A BUSHING
PROCEDE DE FIXATION D'UNE BAGUE

(30) Priorität: 21.08.2015 DE 102015216013
(43) Veröffentlichungstag der Anmeldung: 22.02.2017
(73) Patentinhaber: Purem GmbH, 66539 Neunkirchen (DE)
(72) Erfinder: Gerlich, Harald, 66578 Schiffweiler (DE)
(74) Vertreter: BRP Renaud & Partner mbB Rechtsanwälte Patentanwälte Steuerberater

(56) Entgegenhaltungen:
- EP-A2- 0 352 862
- US-A1- 2006 059 683

## Beschreibung

Die vorliegende Erfindung betrifft ein Verfahren zum Befestigen einer metallischen Buchse an einem metallischen Bauteil, vorzugsweise bei einer Abgasanlagenkomponente. Die Erfindung betrifft außerdem eine Abgasanlagenkomponente, bei der wenigstens eine Buchse nach diesem Verfahren an einem Bauteil der Abgasanlagenkomponente befestigt ist.

Bei einer Vielzahl von Anwendungen müssen Buchsen aus Metall an einem grundsätzlich beliebigen anderen Bauteil aus Metall befestigt werden, beispielsweise um anschließend mit Hilfe der Buchse ein weiteres Anbauteil an besagtem Bauteil montieren zu können, das sich selbst nicht oder nur sehr schwierig direkt am Bauteil befestigen lässt. Generell lässt sich mit Hilfe einer derartigen Buchse somit eine Anbaustelle für ein Anbauteil bereitstellen, das sich für eine direkte Befestigung nicht eignet. Dies gilt insbesondere für eine Serienfertigung. Beispielsweise kann ein elektrisches Anbauteil, wie zum Beispiel ein Sensor, nicht direkt mit dem Bauteil verschweißt werden. In Verbindung mit einer derartigen Buchse kann für das Anbauteil eine andere, geeignete Befestigungsmethode verwendet werden, wie zum Beispiel eine Schraubverbindung. Zweckmäßig kann die Buchse daher ein Schraubgewinde aufweisen, das zum Anbringen des jeweiligen Anbauteils genutzt werden kann.

Zum serienmäßigen Befestigen einer solchen metallischen Buchse an einem metallischen Bauteil kommen vermehrt Widerstandsschweißverfahren zur Anwendung, bei denen die Buchse an der vorgesehenen Schweißstelle am Bauteil in Kontakt gebracht wird und mit Hilfe eines elektrischen Stroms im Kontaktbereich eine Erhitzung durchgeführt wird, die zum Verschweißen der Buchse mit dem Bauteil führt. Als besonders zweckmäßig hat sich hierbei das Widerstandsbuckelschweißen herausgestellt, das häufig verkürzt auch als Buckelschweißen bezeichnet wird. Hierbei wird an der Buchse ein ringförmiger Buckel ausgeformt, der an das Bauteil angedrückt wird und beim Widerstandsschweißen aufschmilzt und die Verschweißung von Buchse und Bauteil bewirkt. Für ein gutes Schweißergebnis ist dabei einerseits eine gleichförmige Kontaktierung zwischen dem Schweißbuckel und dem Bauteil erforderlich. Andererseits ist im Bereich der Kontaktierung des Schweißbuckels eine möglichst gleich bleibende Wandstärke des Bauteils erforderlich. Dies kann beispielsweise dadurch gewährleistet werden, dass der Schweißbuckel in einer Ebene liegt und dass die Schweißstelle des Bauteils eben ausgestaltet ist. Bei umgeformten, insbesondere tiefgezogenen, Bauteilen lässt sich jedoch nicht immer eine gleichbleibende Wandstärke und/oder ebene Konfiguration im Bereich der jeweiligen Schweißstelle realisieren. Dementsprechend kann es beim Buckelschweißen von Buchsen mit Schweißbuckel an umgeformten Bauteilen zu suboptimalen Schweißverbindungen kommen, die nachgearbeitet werden müssen. Insbesondere bei einer Abgasanlagenkomponente muss die Schweißverbindung zwischen Buchse und Bauteil in der Regel gasdicht sein, um eine Emission von Abgasen in die Umwelt zu vermeiden. Ferner sind die Schweißverbindungen dort hohen mechanischen und thermischen Wechselbelastungen ausgesetzt, so dass eine ungleichförmige Schweißverbindung entlang des Schweißbuckels eine reduzierte Haltbarkeit besitzt.

Aus der US 2006/0059683 A1 ist es bekannt, am Bauteil einen entlang der Bauteilöffnung umlaufender Kragen durch Umformung eines die Bauteilöffnung einfassenden Öffnungsrands auszubilden, so dass der Kragen an einer Montageseite des Bauteils vorsteht, die zum Ansetzen der Buchse vorgesehen ist. Beim bekannten Verfahren weist der Kragen einen radial nach innen abgewinkelten, Randbereich auf, der eine Ringfläche zum Ansetzen der mit dem Schweißbuckel ausgestatteten Buchse definiert.

Die vorliegende Erfindung beschäftigt sich mit dem Problem, für ein Befestigungsverfahren der vorstehend beschriebenen Art bzw. für eine Abgasanlagenkomponente, bei der zumindest eine Buchse an wenigstens einem Bauteil befestigt ist, eine verbesserte Ausführungsform anzugeben, die sich insbesondere durch eine erhöhte Qualität der Schweißverbindung zwischen Buchse und Bauteil auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, am Bauteil im Bereich der Schweißstelle eine Bauteilöffnung sowie einen entlang der Bauteilöffnung umlaufenden Kragen vorzusehen, der beim Ansetzen der Buchse an einer umlaufenden Kontaktfläche der Buchse zur Anlage kommt. Anschließend kann durch Andrücken der Buchse gegen das Bauteil eine vorgespannte Kontaktierung der Kontaktfläche am Kragen herbeigeführt werden, während der dann ein Widerstandsschweißen durchführbar ist. Auf diese Weise kann auf einen an der Buchse vorgesehenen Schweißbuckel verzichtet werden, da die Funktion des Schweißbuckels durch den am Bauteil vorgesehenen Kragen erfüllt wird. Zu diesem Zweck Kontaktiert der Kragen stirnseitig die Kontaktfläche der Buchse. Darüber hinaus erfüllt dieser Kragen eine zusätzliche Funktion. Der Kragen ist im Unterschied zu einem buchsenseitigen Schweißbuckel federelastisch. Hierdurch kann beim Andrücken der Buchse gegen das Bauteil der Kragen federelastisch nachgeben und dadurch Ungleichheiten der Wandstärke und/oder Abweichungen von einer Ebene in der Umfangsrichtung entlang des Kragens kompensieren. Beim anschließenden Widerstandsschweißen unter Vorspannung lässt sich eine hinreichend homogene Schweißverbindung entlang des Umfangs des Kragens zwischen Buchse und Bauteil herstellen, wodurch die Qualität der Schweißverbindung verbessert ist. Insbesondere hat sich gezeigt, dass bei der Verwendung dieses Verfahrens der Aufwand zur Nacharbeit reduziert ist.

Somit erfolgt beim hier vorgestellten Verfahren das Andrücken der Buchse derart, dass der Kragen federelastisch nachgibt, um in der Umfangsrichtung weitgehend geschlossen an der Kontaktfläche zur Anlage zu kommen. Es ist klar, dass mit dem federelastischen Nachgeben des Kragens grundsätzlich auch eine plastische Verformung des Kragens einhergehen kann. Diese ist jedoch in der Regel im Vergleich zur federelastischen Umformung eher gering. Ferner soll mit der Formulierung "weitgehend geschossen" zum Ausdruck gebracht werden, dass der Kontakt zwischen Kragen und Kontaktfläche nicht zwingend in der Umfangsrichtung vollständig geschlossen erfolgen muss, was jedoch bevorzugt ist. Grundsätzlich können auch noch kleinere Fehlstellen in der Umfangsrichtung toleriert werden, in denen kein Kontakt zwischen Kontaktfläche und Kragen vorliegt. Durch das Andrücken wird in Verbindung mit dem federelastischen Kragen jedoch erreicht, dass diese Fehlstellen deutlich kleiner sind, in deutlich kleinerer Anzahl auftreten und im Idealfall vollständig eliminiert sind.

Die Buchse wird vor dem Widerstandsschweißen im Bereich der Bauteilöffnung, insbesondere im Wesentlichen zentrisch zur Bauteilöffnung, positioniert und angedrückt. Die Formulierung "im Wesentlichen zentrisch" berücksichtigt dabei übliche Herstellungstoleranzen. Insbesondere wird somit das Andrücken der Buchse gegen das Bauteil so durchgeführt, dass damit eine federelastische Verformung des Kragens einhergeht.

Grundsätzlich eignet sich dieses Verfahren für jedes Widerstandsschweißen. Bevorzugt kommt dabei jedoch ein Mittelfrequenz-Widerstandsschweißen zur Anwendung. Hierbei handelt es sich um eine Widerstandsschweißtechnik, die mit Gleichstrom und einer Inverteranlage arbeitet. Taktfrequenzen eines dabei zum Einsatz kommenden Wechselrichters liegen dabei üblicherweise zwischen 1000 bis 4000 Hz. Als besonders vorteilhaft hat sich das hier vorgestellte Verfahren für ein Kondensatorentladungsschweißen herausgestellt. Hier kommt eine Kondensatorbatterie zum Einsatz, die während vergleichsweise kurzer Schweißpulse relativ viel Energie abgeben kann und die zwischen aufeinanderfolgenden Schweißpulsen mit vergleichsweise wenig elektrischer Leistung wieder aufgeladen werden kann.

Der Kragen wird dabei durch Umformung eines die Bauteilöffnung einfassenden Öffnungsrands gebildet, so dass er einen integralen Bestandteil des Bauteils bildet. Die Herstellung des Kragens bzw. die Ausformung des Kragens erfolgt dabei zweckmäßig bei der Herstellung der Bauteilöffnung. Denkbar ist ein kombinierter Stanz- und Umformvorgang, der in einem einzigen Arbeitsschritt oder in wenigstens zwei Arbeitsschritten durchgeführt wird.

Vorteilhaft ist somit eine Ausführungsform, bei der das Andrücken der Buchse am Kragen so erfolgt, dass der Kragen radial und/oder axial federelastisch nachgibt, um Herstellungstoleranzen auszugleichen, so dass der Kragen in der Umfangsrichtung weitgehend geschlossen an der Kontaktfläche zur Anlage kommt.

Weiterhin ist eine Ausführungsform bevorzugt, bei der für das Bauteil zumindest im Bereich der Bauteilöffnung eine Wandstärke gewählt wird, die kleiner ist als eine Wandstärke der Buchse in einem die Kontaktfläche aufweisenden Endbereich. Da der Kragen durch Umformung des Öffnungsrands integral am Bauteil ausgeformt wird, entspricht die Wandstärke des Bauteils im Bereich der Bauteilöffnung im Wesentlichen auch einer Wandstärke des Kragens. Je nach Umformvorgang kann der Kragen auch eine kleinere Wandstärke als das Bauteil aufweisen. Beispielsweise ist die Wandstärke der Buchse mindestens doppelt so groß wie die Wandstärke des Bauteils und/oder des Kragens. Während es sich beim Bauteil bevorzugt um ein Blechformteil handelt, kann es sich bei der Buchse vorzugsweise um ein Gußteil handeln. Die im Vergleich zur Buchse reduzierte Wandstärke des Bauteils bzw. des Kragens verbessert das federelastische Nachgeben des Kragens beim Andrücken der Buchse und erhöht somit die Fertigungsqualität.

Zweckmäßig ist eine Ausführungsform, bei welcher der Kragen so geformt wird, dass er mit einer Höhe über die Montageseite vorsteht, die mindestens so groß ist wie oder größer ist als eine Wandstärke des Bauteils im Bereich der Bauteilöffnung. Auch diese Maßnahme verbessert das federelastische Nachgeben des Kragens beim Andrücken der Buchse. Beispielsweise kann diese Höhe mindestens doppelt so groß wie die Wandstärke des Bauteils und/oder des Kragens gewählt sein.

Gemäß einer vorteilhaften Ausführungsform wird die Kontaktfläche an der Buchse eben ausgestaltet. Die Kontaktfläche liegt demnach in einer Kontaktebene. Hierdurch lassen sich bei der Zentrierung der Buchse relativ zur Bauteilöffnung vergleichsweise große Toleranzen realisieren.

Alternativ kann die Kontaktfläche an der Buchse auch konisch ausgestaltet werden, so dass die Kontaktfläche quasi einen Kegelmantel oder Konus bildet. Diese Bauform führt zu einer Selbstzentrierung der Buchse relativ zur Bauteilöffnung, wenn die Buchse über diese konische Kontaktfläche mit dem Kragen in Kontakt gebracht wird.

Bei einer anderen Ausführungsform kann die Buchse eine Durchgangsöffnung aufweisen, die im angeschweißten Zustand an die Bauteilöffnung anschließt und die eine Längsmittelachse der Buchse definiert. Die Längsmittelachse der Buchse entspricht dann der Längsmittelachse der geradlinigen und zweckmäßig zylindrischen, vorzugsweise kreiszylindrischen, Durchgangsöffnung. Die Buchse kann außerdem einen Kopplungsbereich aufweisen, der an einer vom Bauteil abgewandten Seite an die Kontaktfläche anschließt und zum Anbauen eines Anbauteils dient. Typische Anbauteile können wie genannt elektrische Komponenten, wie zum Beispiel Sensoren und dergleichen sein. Bei einer Abgasanlage kann ein derartiges Anbauteil vorzugsweise ein Sensor sein, zum Beispiel zur Erfassung von Temperatur, Druck, Sauerstoff, Schwefel und/oder Stickoxiden. Insbesondere kann die Buchse im Kopplungsbereich ein Schraubgewinde aufweisen, vorzugsweise ein Innengewinde, das in einer die Durchgangsöffnung einfassenden Wand ausgebildet ist.

Die Kontaktfläche läuft entlang einer Umlaufbahn ringförmig in einer Umlaufebene um. Gemäß einer vorteilhaften Ausführungsform kann sich die Längsmittelachse der Buchse senkrecht zur Umlaufebene erstrecken. Hierdurch ergibt sich eine Konfiguration, die bezüglich des Bauteils im Bereich der Bauteilöffnung eine gerade Anbindung des jeweiligen Anbauteils ermöglicht, so dass diese Konfiguration auch als gerade Buchse bezeichnet werden kann. Alternativ dazu kann die Längsmittelachse der Buchse gegenüber der Umlaufebene in einem Winkelbereich von 15° bis 75°, vorzugsweise von 30° bis 60°, insbesondere von 40° bis 50°, geneigt sein. Hierdurch wird eine schräge Struktur realisiert, die eine schräge Anbindung des jeweiligen Anbauteils am Bauteil ermöglicht. Diese schräge Konfiguration kann auch als schräge Buchse bezeichnet werden.

Gemäß einer nicht erfindungsgemäßen Ausführungsform kann ein freistehender Rand des Kragens vor dem Ansetzen der Buchse abgerundet werden. Die Abrundung des freistehenden Rands des Kragens erfolgt zweckmäßig während der Herstellung des Kragens. Der freistehende Rand ist dabei ein der Buchse zugewandtes Ende während des Ansetzens der Buchse. Der abgerundete freistehende Rand des Kragens führt zu einem linienförmigen Kontakt mit der Kontaktfläche, was das Schweißergebnis verbessert.

Erfindungsgemäß weist der freistehende Rand eine umlaufende Kragenfläche auf, die einerseits von einer umlaufenden Außenkante und andererseits von einer umlaufenden Innenkante begrenzt ist. Die Außenkante besitzt dabei einen größeren Abstand von der Bauteilöffnung als die Innenkante, so dass die Außenkante bezüglich der Bauteilöffnung distal angeordnet ist, während die Innenkante bezüglich der Bauteilöffnung proximal angeordnet ist. Eine derartige Konfiguration lässt sich besonders einfach durch einen Stanzvorgang beim Herstellen der Bauteilöffnung realisieren.

Gemäß einer Weiterbildung kann die Kragenfläche eben ausgestaltet sein, so dass sie in einer Kragenebene liegt. Besonders vorteilhaft ist dabei eine Kombination mit der weiter oben beschriebenen Ausführungsform, bei der die Kontaktfläche eben ist. In diesem Fall kommen die Kontaktfläche und die Kragenfläche flächig aneinander zur Anlage, was eine besonders innige Schweißverbindung ermöglicht.

Alternativ dazu kann die Kontaktfläche auch konisch ausgestaltet sein, so dass sie einen Konus bzw. einen Kegelmantel bildet. Diese Konfiguration lässt sich leichter herstellen und begünstigt das Federverhalten des Kragens.

Bei einer anderen vorteilhaften Ausführungsform kann vorgesehen sein, dass der Kragen zylindrisch, insbesondere kreiszylindrisch, ausgestaltet ist. Der Kragen bildet dabei einen Zylindermantel. Hierdurch lässt sich ein Querschnitt der Bauteilöffnung mit vergleichsweise engen Toleranzen realisieren. Ferner begünstigt diese Ausführungsform die ebene Ausgestaltung der Kragenfläche.

Alternativ dazu kann der Kragen konisch ausgestaltet sein, so dass er einen Kegelmantel oder Konus bildet. Diese Ausführungsform führt zu einer verbesserten Elastizität des Kragens in der Andrückrichtung der Buchse.

Bei einer anderen Ausführungsform kann die Buchse einen ringförmigen Vorsprung aufweisen, der von der Kontaktfläche eingefasst ist und der beim Ansetzen der Buchse in die Bauteilöffnung eindringt. Hierdurch wird während der Montage eine formschlüssige Positionierung zwischen Buchse und Bauteil im Bereich der Bauteilöffnung realisiert, was die Produktionssicherheit erhöht. Sofern die Durchgangsöffnung vorgesehen ist, durchdringt diese auch den Vorsprung zentrisch.

Gemäß einer vorteilhaften Weiterbildung kann der Vorsprung eine umlaufende, der Kontaktfläche zugewandte, ringförmige Umfangsfläche aufweisen. Diese Umfangsfläche kann nun bevorzugt zylindrisch, insbesondere kreiszylindrisch, ausgestaltet sein. Demnach bildet die Umfangsfläche einen Zylindermantel. Eine derartige zylindrische Umfangsfläche lässt sich am Vorsprung der Buchse besonders einfach herstellen. Ferner kann sie mit der zuvor genannten zylindrischen Ausgestaltung des Kragens eine Steckverbindung zwischen Buchse und Bauteil realisieren, bei welcher der Vorsprung in den Kragen einsteckbar ist. Auch dies vereinfacht eine funktionssichere Montage.

Alternativ dazu kann die Umfangsfläche konisch ausgestaltet sein, so dass sie einen Kegelmantel oder Konus bildet. In diesem Fall bewirkt die konische Umfangsfläche eine Zentrierung der Buchse relativ zur Bauteilöffnung beim Ansetzen der Buchse.

Der vorstehend genannte Vorsprung wird bevorzugt dann an der Buchse realisiert, wenn die Kontaktfläche eben ausgestaltet ist.

Gemäß einer anderen vorteilhaften Ausführungsform, die mehrere der vorstehend genannten Ausführungsformen gezielt miteinander kombiniert, kann der Kragen konisch sein, kann ein freistehender Rand des Kragens eine bezüglich der Bauteilöffnung distale Außenkante und eine bezüglich der Bauteilöffnung proximale Innenkante aufweisen, kann die Buchse einen ringförmigen Vorsprung aufweisen, der von der Kontaktfläche eingefasst ist und der beim Ansetzen der Buchse in die Bauteilöffnung eindringt, kann der Vorsprung eine umlaufende, der Kontaktfläche zugewandte, ringförmig Umfangsfläche aufweisen, kann die Umfangsfläche zylindrisch sein und kann die Kontaktfläche eben sein. Das Andrücken der Buchse an das Bauteil kann bei dieser Konstellation gemäß einer bevorzugten Ausführungsform so durchgeführt werden, dass die Außenkante an der Kontaktfläche und die Innenkante an der Umfangsfläche zur Anlage kommen. Hierdurch lässt sich beim anschließenden Widerstandsschweißen eine besonders hochwertige Schweißverbindung realisieren, da der Kragen einerseits am linienförmigen Kontakt der Außenkante mit der Kontaktfläche und andererseits am linienförmigen Kontakt der Innenkante an der Umfangsfläche aufschmilzt und hierdurch die Buchse sowohl über die Kontaktfläche als auch über die Umfangsfläche in die Schweißverbindung einbindet.

Eine erfindungsgemäße Abgasanlagenkomponente besitzt zumindest ein Bauteil, wie zum Beispiel ein Gehäuse, an dem zumindest eine Buchse nach dem vorstehend beschriebenen Verfahren befestigt ist. Die Buchse dient beispielsweise zum Anbauen eines Sensors. Die Abgasanlagenkomponente kann ein Schalldämpfer, ein Katalysator, ein Partikelfilter oder eine beliebige Kombination daraus sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

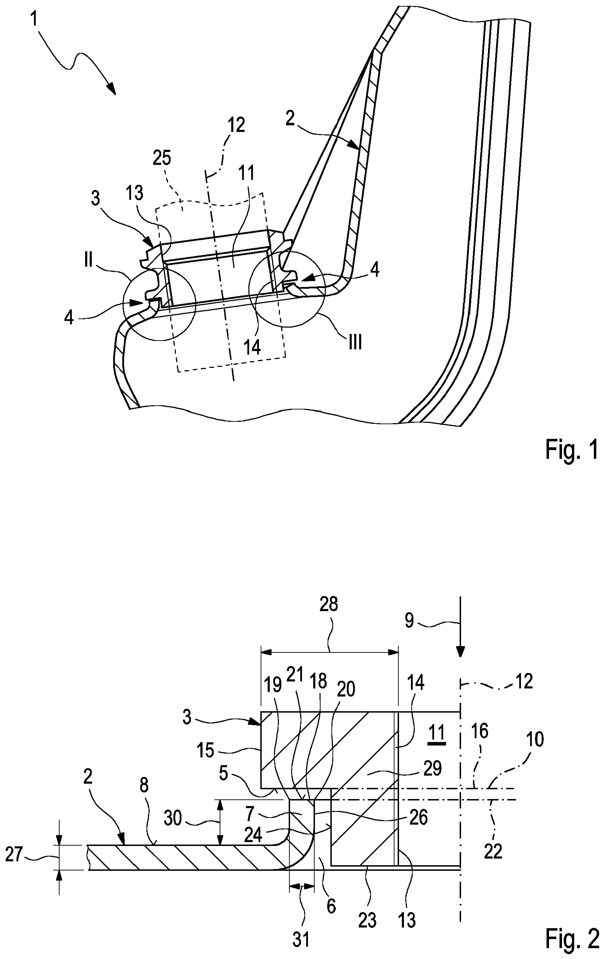

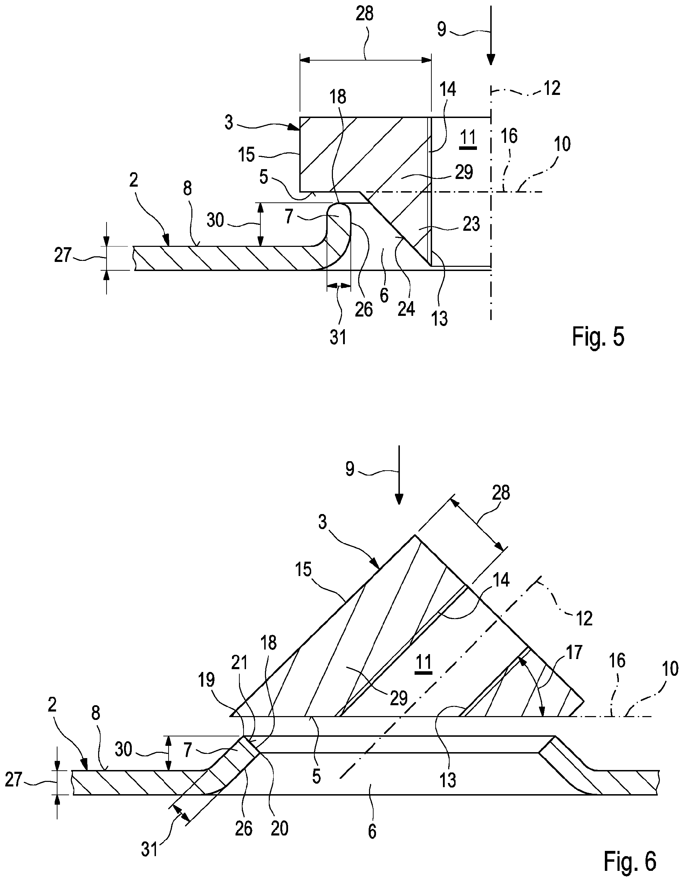

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Dabei zeigen die Fig. 1 bis 4, 6 und 7 erfindungsgemäße Ausführungsformen, während Fig. 5 eine nicht erfindungsgemäße Ausführungsform zeigt.

Es zeigen, jeweils schematisch,
- Fig. 1: eine Schnittansicht einer Abgasanlagenkomponente im Bereich einer Buchse vor dem Anschweißen an ein Bauteil der Abgasanlagenkomponente,
- Fig. 2: eine vereinfachte Schnittansicht eines Details II aus Fig. 1,
- Fig. 3: eine vereinfachte Schnittansicht eines Details III aus Fig. 1,
- Fig. 4 und 5: weitere Ansichten wie in den Fig. 2 und 3, jedoch bei weiteren Ausführungsformen,
- Fig. 6 und 7: vereinfachte Schnittansichten im Bereich der Buchse wieder vor dem Verschweißen, jedoch bei anderen Ausführungsformen.

Entsprechend Fig. 1 besitzt eine Abgasanlagenkomponente 1, bei der es sich beispielsweise um einen Katalysator handeln kann, zumindest ein Bauteil 2, zum Beispiel ein Gehäuse, an dem zumindest eine Buchse 3 befestigt ist. Die Befestigung der Buchse 3 am Bauteil 2 soll dabei mittels eines Schweißverfahrens realisiert werden, das nachfolgend noch näher beschrieben wird. Das Schweißverfahren ist in den Darstellungen der Fig. 1 bis 7 jedoch noch nicht vollendet, so dass in den Fig. 1 bis 7 insbesondere keine Schweißstelle oder Schweißnaht erkennbar ist. Eine Position, in der sich besagte Schweißstelle bzw. Schweißverbindung nach Vollendung des Schweißverfahrens befinden soll, ist in Fig. 1 mit 4 bezeichnet.

Zur Durchführung des Schweißverfahrens sind das Bauteil 2 und die Buchse 3 aus einem Metall hergestellt. Dabei kann es sich grundsätzlich um unterschiedliche Metalle handeln, solange sie miteinander verschweißbar sind. Gemäß den Fig. 2 bis 7 wird an der Buchse 3 eine ringförmige Kontaktfläche 5 ausgebildet. Am Bauteil 2 wird eine Bauteilöffnung 6 ausgebildet. Außerdem wird am Bauteil 2 ein entlang der Bauteilöffnung 6 umlaufender Kragen 7 ausgebildet. Der Kragen 7 steht dabei an einer Montageseite 8 des Bauteils 2 vor bzw. ab, die zum Ansetzen der Buchse 3 in einer durch einen Pfeil angedeuteten Ansetzrichtung 9 vorgesehen ist.

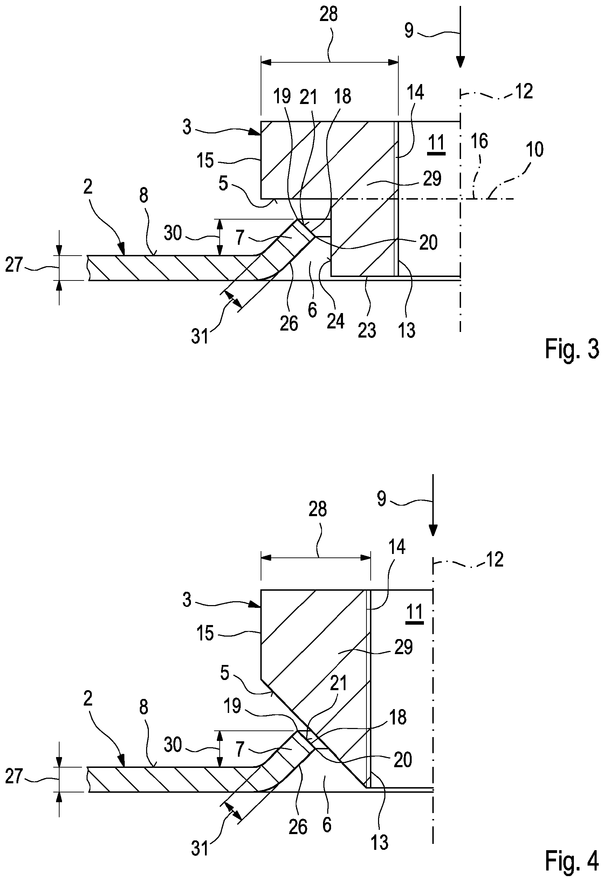

Das Ansetzen der Buchse 3 an der Montageseite 8 erfolgt im Wesentlichen zentrisch zur Bauteilöffnung 6, derart, dass die Kontaktfläche 5 den Kragen 7 an dessen Stirnseite oder Endkante berührt, die weiter unten als Kragenfläche 21 bezeichnet wird. Beachtenswert ist in Fig. 1, dass in den Details II und III zwei verschiedene Ausführungsformen dargestellt sind, die vergrößert in den Fig. 2 und 3 wiedergegeben sind. Es ist klar, dass innerhalb einer Schweißverbindung 4 vorzugsweise jeweils nur eine einzige Ausführungsform realisiert wird.

Anschließend wird die Buchse 3 in der Ansetzrichtung 9 gegen das Bauteil 2 angedrückt, derart, dass die Kontaktfläche 5 unter Vorspannung am Kragen 7 anliegt. Dabei kommt es bevorzugt gleichzeitig zu einem weitgehend federelastischen Nachgeben des Kragens 7, wodurch Herstellungstoleranzen, wie z.B. eine in Umfangsrichtung variierende Kragenhöhe 30 und/oder eine in Umfangsrichtung variierende Wandstärke 31 des Kragens 7 und/oder eine von der Kreisform abweichende Umlaufkontur des Kragens 7, ausgeglichen werden, so dass der Kragen 7 im Idealfall in der Umfangsrichtung lückenlos geschlossen an der Kontaktfläche 5 zur Anlage kommt. Während die Kontaktfläche 5 vorgespannt am Kragen 7 anliegt, wird ein Widerstandsschweißen durchgeführt, derart, dass Buchse 3 und Bauteil 2 im Bereich des Kontakts von Kontaktfläche 5 und Kragen 7 miteinander verschweißt werden. Somit wird letztlich die in Fig. 1 angedeutete ringförmig umlaufende Schweißverbindung 4 erzeugt.

Für das Widerstandsschweißen kommt bevorzugt ein Kondensatorentladungsschweißen zum Einsatz, das sich durch besonders kurze Schweißimpulse auszeichnet.

Bei den Ausführungsformen der Fig. 2, 3 und 5-7 ist die Kontaktfläche 5 eben ausgestaltet, so dass sie in einer Kontaktebene 10 liegt. Bei der in Fig. 4 gezeigten Ausführungsform ist die Kontaktfläche 5 dagegen konisch ausgestaltet.

Bei allen gezeigten Ausführungsformen besitzt die Buchse 3 eine Durchgangsöffnung 11. Diese ist im montierten Zustand, also bei angeschweißter Buchse 3 an die Bauteilöffnung 6 angeschlossen. Die Durchgangsöffnung 11 ist geradlinig ausgestaltet, so dass sie eine Längsmittelachse 12 der Buchse 3 definiert. Die Durchgangsöffnung 11 ist von einer zylindrischen Wandung 13 eingefasst, die zweckmäßig ein Innengewinde 14 besitzt. Weiterhin weist die Buchse 3 einen Kopplungsbereich 15 auf, der an einer vom Bauteil 2 abgewandten Seite an die Kontaktfläche 5 anschließt und der zum Anbauen eines nur in Fig. 1 mit unterbrochener Linie angedeuteten Anbauteils 25, wie zum Beispiel eines Sensors, dient. Insbesondere ist dieser Kopplungsbereich 15 durch einen Körper der Buchse 3 gebildet, an dem die Kontaktfläche 5 ausgebildet ist.

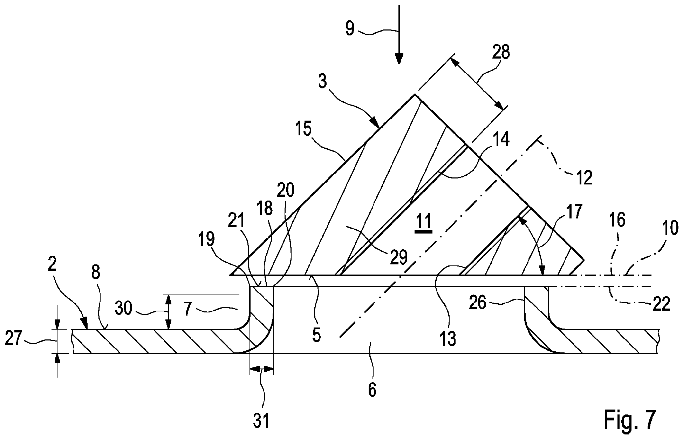

Die Kontaktfläche 5 läuft entlang einer Umlaufbahn ringförmig um. Diese Umlaufbahn liegt bei ebener Kontaktfläche 5 in einer Umlaufebene 16. Bei den Ausführungsformen der Fig. 2, 3 und 5 erstreckt sich die Längsmittelachse 12 senkrecht zur Umlaufebene 16. Im Unterschied dazu zeigen die Fig. 6 und 7 Ausführungsbeispiele, bei denen die Längsmittelachse 12 gegenüber dieser Umlaufebene 16 geneigt ist und damit einen Neigungswinkel 17 einschließt, der in den Beispielen der Fig. 6 und 7 rein exemplarisch bei etwa 45° liegt. Für diesen Neigungswinkel 17 ist ein Winkelbereich von 15° bis 75° vorteilhaft. Bevorzugt ist ein Winkelbereich von 30° bis 60°. Besonders bevorzugt ist ein Winkelbereich von 40° bis 50°.

Gemäß den Fig. 2 bis 7 besitzt der Kragen 7 einen freistehenden Rand 18, der sich beim Ansetzen der Buchse 3 an einem der Buchse 3 zugewandten Ende des Kragens 7 befindet. Dieser freistehende Rand 18 kann gemäß der in Fig. 5 exemplarisch angedeuteten Ausführungsform grundsätzlich abgerundet ausgestaltet sein. Bevorzugt ist jedoch die in den Fig. 2 bis 4, 6 und 7 gezeigte Ausführungsform, bei welcher der freistehende Rand 18 eine umlaufende, bezüglich der Bauteilöffnung 6 distale Außenkante 19 und eine umlaufende, bezüglich der Bauteilöffnung 6 proximale Innenkante 20 aufweist. Ferner besitzt der freistehende Rand 18 eine Kragenfläche 21, die radial außen von der Außenkante 19 und radial innen von der Innenkante 20 begrenzt ist. Eine derartige Konstellation lässt sich besonders einfach herstellen, wenn die Bauteilöffnung 6 durch einen Stanzvorgang im Bauteil 2 ausgebildet wird.

Das Bauteil 2 ist dabei zweckmäßig durch einen Umformvorgang, beispielsweise durch Tiefziehen, hergestellt. Anschließend kann die jeweilige Bauteilöffnung 6 beispielsweise durch einen Stanzvorgang ausgebildet werden. Der Kragen 7 kann ebenfalls durch einen Umformvorgang integral am Bauteil 2 ausgeformt werden. Beispielsweise wird hierbei ein die Bauteilöffnung 6 einfassender Öffnungsrand 26 umgeformt, insbesondere ausgestellt. Durch das Tiefziehen des Bauteils 2 und durch die Herstellung des Kragens 7 durch einen Umformvorgang, kann der Kragen 7 eine entlang seiner Umfangsrichtung variierende Wandstärke 31 aufweisen. Ferner kann der freistehende Rand 18 toleranzbedingt bezüglich einer senkrecht zur Axialrichtung der Bauteilöffnung 6 verlaufenden Referenzebene in der Umfangsrichtung schwankende Abstände besitzen, was einer in Umfangsrichtung variierenden Kragenhöhe 30 entspricht. Diese herstellungsbedingten Schwankungen können durch das hier vorgestellte Befestigungsverfahren insbesondere dadurch kompensiert werden, dass der Kragen 7 in der Ansetzrichtung 9 federelastisch ist, so dass beim Andrücken der Buchse 3 an das Bauteil 2 ein optimaler Kontakt zwischen Kontaktfläche 5 und Kragen 7 realisierbar ist, der eine hinreichend hochwertige Schweißverbindung 4 beim Widerstandsschweißen ermöglicht.

Die zuvor genannte Kragenfläche 21 ist bei den Ausführungsformen der Fig. 2 und 7 eben ausgestaltet, so dass sie in einer Kragenebene 22 liegt. Bei den Ausführungsformen der Fig. 3, 4 und 6 ist die Kragenfläche 21 dagegen konisch ausgestaltet, so dass sie einen Konus bzw. Kegelmantel bildet.

Bei den Ausführungsformen der Fig. 2, 5 und 7 ist der Kragen 7 zylindrisch ausgestaltet, so dass er einen Zylindermantel bildet. Im Unterschied dazu ist der Kragen 7 bei den bevorzugten Ausführungsbeispielen der Fig. 3, 4 und 6 konisch ausgestaltet, so dass er einen Kegelmantel oder Konus bildet. Die konische Ausgestaltung des Kragens 7 erhöht die Federelastizität des Kragens 7 in der Ansetzrichtung 9.

Bei den Ausführungsbeispielen der Fig. 2, 3 und 5 ist die Buchse 3 mit einem ringförmigen Vorsprung 23 ausgestattet, der von der Kontaktfläche 5 eingefasst ist bzw. darin konzentrisch angeordnet ist. Der Vorsprung 23 geht beim Ansetzen der Buchse 3 voraus und ist so auf die Bauteilöffnung 6 abgestimmt, dass er in die Bauteilöffnung 6 eindringt. Der Vorsprung 23 ist dabei integraler Bestandteil des Buchsenkörpers, der insbesondere durch den Kopplungsbereich 15 gebildet ist. Somit kann sich insbesondere das zuvor genannte Innengewinde 14 bis in den Vorsprung 23 hineinerstrecken. Im Unterschied zu den Fig. 2, 3 und 5 ist bei den Ausführungsformen der Fig. 4, 6 und 7 kein derartiger Vorsprung 23 vorgesehen. Bei diesen Ausführungsformen bildet die Kontaktfläche 5 das vorausgehende Ende bzw. das dem Bauteil 2 zugewandte Ende der Buchse 3.

Besagter Vorsprung 23 besitzt gemäß den Fig. 2, 3 und 5 eine Umfangsfläche 24, die der Kontaktfläche 5 zugewandt ist und ringförmig umlaufend ist. Die Umfangsfläche 24 befindet sich somit an der von der Durchgangsöffnung 11 abgewandten Außenseite des Vorsprungs 23. Bei den Ausführungsformen der Fig. 2 und 3 ist diese Umfangsfläche 23 zylindrisch ausgestaltet, so dass sie einen Zylindermantel bildet. Im Unterschied dazu zeigt Fig. 5 eine Ausführungsform, bei der die Umfangsfläche 24 konisch ausgestaltet ist, so dass sie einen Kegelmantel oder Konus bildet.

Als besonders vorteilhaft hat sich die in Fig. 3 gezeigte Ausführungsform herausgestellt. Dort ist der Kragen 7 konisch. Der freistehende Rand 18 weist die Außenkante 19 und die Innenkante 20 auf. Die Buchse 3 besitzt den Vorsprung 23 mit Umfangsfläche 24. Die Umfangsfläche 24 ist zylindrisch. Die Kontaktfläche 5 ist eben. Durch diese Konfiguration ergibt sich beim Andrücken der Buchse 3 zunächst ein axialer Kontakt zwischen der Außenkante 19 und der Kontaktfläche 5. Durch federndes Nachgeben des Kragens 7 kommt es dabei außerdem zu einem radialen Kontakt zwischen der Innenkante 20 und der Umfangsfläche 24. Im nachfolgenden Schweißvorgang lässt sich dadurch eine besonders hochwertige Schweißverbindung 4 realisieren.

Obwohl bei den hier bevorzugten Ausführungsformen eine Buchse 3 zum Einsatz kommt, die keinen Schweißbuckel aufweist, ist grundsätzlich denkbar, das hier vorgestellte Verfahren auch mit einer herkömmlichen Buchse 3 zu realisieren, die einen ringförmigen Schweißbuckel aufweist, der dann die Kontaktfläche 5 aufweist und der mit dem Kragen 7 in Kontakt kommt. Der Kontakt des freistehenden Endes 18 des Kragens 7 kann dabei je nach Konstellation an einer Außenflanke des Schweißbuckels, z.B. über die Innenkante 20, oder an einer Innenflanke des Schweißbuckels, z.B. über die Außenkante 19, oder an einer Stirnseite des Schweißbuckels, z.B. über die stirnseitige Kragenfläche 21, erfolgen.

Das Bauteil 2 ist vorzugsweise ein Blechformteil und kann zumindest im Bereich der Bauteilöffnung 6 eine Wandstärke 27 aufweisen, die kleiner ist als eine Wandstärke 28 der Buchse 3 in einem die Kontaktfläche 5 aufweisenden Endbereich 29 der Buchse 3. Bei der Buchse 3 handelt es sich vorzugsweise um ein Gussteil. Die Wandstärke 28 der Buchse 3 wird dabei radial zu ihrer Längsmittelachse 12 gemessen. Von diesem Endbereich 29 der Buchse 3 steht beispielsweise der vorstehend genannte Vorsprung 23 axial ab, so dass die Wandstärke 28 der Buchse 3 außerhalb dieses Vorsprungs 23 gemessen ist.

Bei den hier gezeigten Beispielen erfolgt die Umformung des Öffnungsrands 26 zum Herstellen des Kragens 7 derart, dass sich dabei die Wandstärke nicht wesentlich verändert, so dass der Kragen 7 eine Wandstärke 31 aufweist, die letztlich im Wesentlichen gleich groß ist wie die Wandstärke 27 des Bauteils 2. In anderen Fällen nimmt die Wandstärke beim Umformen ab, so dass die Wandstärke 31 des Kragens 7 dann kleiner ist als die Wandstärke 27 des Bauteils 2.

Des Weiteren kann vorgesehen sein, dass der Kragen 7 nach seiner Herstellung durch Umformung des Offnungsrand 26 eine Höhe 30 aufweist, mit der er über die Montageseite 8 des Bauteils 2 vorsteht. Diese Höhe 30 ist vorzugsweise nun mindestens so groß wie die Wandstärke 27 des Bauteils 2 im Bereich der Bauteilöffnung 6. In den Beispielen der Fig. 3 und 4 ist die Höhe 30 des Kragens 7 etwa gleich groß wie die Wandstärke 27 des Bauteils 2. In den Beispielen der Fig. 2 und 5 bis 7 ist die Höhe 30 des Kragens 7 dagegen größer als, vorzugsweise mindestens doppelt so groß wie, die Wandstärke 27 des Bauteils 2 im Bereich der Bauteilöffnung 6.

## Patentansprüche

1. Verfahren zum Befestigen einer metallischen Buchse (3) an einem metallischen Bauteil (2),
- bei dem an der Buchse (3) eine ringförmige Kontaktfläche (5) ausgebildet wird,
- bei dem an dem Bauteil (2) eine Bauteilöffnung (6) ausgebildet wird,
- bei dem am Bauteil (2) ein entlang der Bauteilöffnung (6) umlaufender Kragen (7) durch Umformung eines die Bauteilöffnung (6) einfassenden Öffnungsrands (26) ausgebildet wird, so dass der Kragen (7) an einer Montageseite (8) des Bauteils (2) vorsteht, die zum Ansetzen der Buchse (3) vorgesehen ist, und **dadurch gekennzeichnet, dass** der Kragen (7) einen freistehenden Rand (18) aufweist, der sich beim Ansetzen der Buchse (3) an einem der Buchse (3) zugewandten Ende des Kragens (7) befindet, wobei der freistehende Rand (18) des Kragens (7) vor dem Ansetzen der Buchse (3) eine umlaufende Kragenfläche (21) aufweist, die von einer umlaufenden, bezüglich der Bauteilöffnung (6) distalen Außenkante (19) und einer umlaufenden, bezüglich der Bauteilöffnung (6) proximalen Innenkante (20) begrenzt ist,
- wobei die Buchse (3) im Bereich der Bauteilöffnung (6) so an der Montageseite (8) des Bauteils (2) angedrückt wird, dass die Kontaktfläche (5) die stirnseitige Kragenfläche (21) oder die distale Außenkante (19) des freistehenden Rands (18) des Kragens (7) berührt, und die Buchse (3) gegen das Bauteil (2) angedrückt wird, so dass die Kontaktfläche (5) unter Vorspannung am freistehenden Rand (18) des Kragens (7) anliegt,
- bei dem ein Widerstandsschweißen durchgeführt wird, während die Kontaktfläche (5) vorgespannt freistehenden R and (18) des Kragens (7) anliegt, so dass Buchse (3) und Bauteil (2) im Bereich des Kontakts von Kontaktfläche (5) und Kragen (7) miteinander verschweißt werden.

2. Verfahren nach Anspruch 1,
**dadurch gekennzeichnet,**
**dass** das Andrücken der Buchse (3) am Kragen (7) so erfolgt, dass der Kragen (7) weitgehend federelastisch nachgibt, um in der Umfangsrichtung weitgehend geschlossen an der Kontaktfläche (5) zur Anlage zu kommen.

3. Verfahren nach Anspruch 1 oder 2,
**dadurch gekennzeichnet,**
**dass** für das Bauteil (2) zumindest im Bereich der Bauteilöffnung (6) eine Wandstärke (27) gewählt wird, die kleiner ist als eine Wandstärke (28) der Buchse (3) in einem die Kontaktfläche (5) aufweisenden Endbereich (29).

4. Verfahren nach einem der Ansprüche 1 bis 3,
**dadurch gekennzeichnet,**
**dass** der Kragen (7) so geformt wird, dass er mit einer Höhe (30) über die Montageseite (8) vorsteht, die mindestens so groß ist wie oder größer ist als eine Wandstärke (27) des Bauteils (2) im Bereich der Bauteilöffnung (6).

5. Verfahren nach einem der Ansprüche 1 bis 4,
**dadurch gekennzeichnet,**
**dass** die Kontaktfläche (5) eben oder konisch ist.

6. Verfahren nach einem der Ansprüche 1 bis 5,
**dadurch gekennzeichnet,**
- **dass** die Buchse (3) eine Durchgangsöffnung (11) aufweist, die im angeschweißten Zustand an die Bauteilöffnung (6) anschließt und die eine Längsmittelachse (12) der Buchse (3) definiert,
- **dass** die Buchse (3) einen Kopplungsbereich (15) aufweist, der an einer vom Bauteil (2) abgewandten Seite an die Kontaktfläche (5) anschließt und zum Anbauen eines Anbauteils (25) dient.

7. Verfahren nach Anspruch 6,
**dadurch gekennzeichnet,**
- **dass** eine Umlaufbahn, entlang der die Kontaktfläche (5) ringförmig umläuft, in einer Umlaufebene (16) liegt,
- **dass** sich die Längsmittelachse (12) senkrecht zur Umlaufebene (16) erstreckt.

8. Verfahren nach Anspruch 6,
**dadurch gekennzeichnet,**
- **dass** eine Umlaufbahn, entlang der die Kontaktfläche (5) ringförmig umläuft, in einer Umlaufebene (16) liegt,
- **dass** die Längsmittelachse (12) gegenüber der Umlaufebene (16) in einem Winkelbereich von 15° bis 75°, vorzugsweise von 30° bis 60°, insbesondere von 40° bis 50°, geneigt ist.

9. Verfahren nach einem der vorhergehenden Ansprüche,
**dadurch gekennzeichnet,**
- **dass** die Kragenfläche (21) eben oder konisch ist, und/oder
- **dass** der Kragen (7) zylindrisch oder konisch ist.

10. Verfahren nach einem der vorhergehenden Ansprüche,
**dadurch gekennzeichnet,**
**dass** die Buchse (3) einen ringförmigen Vorsprung (23) aufweist, der von der Kontaktfläche (5) eingefasst ist und der beim Ansetzen der Buchse (3) in die Bauteilöffnung (6) eindringt.

11. Verfahren nach Anspruch 10,
**dadurch gekennzeichnet,**
**dass** der Vorsprung (23) eine umlaufende, der Kontaktfläche (5) zugewandte, ringförmige Umfangsfläche (24) aufweist, die zylindrisch oder konisch ist.

12. Verfahren nach einem der vorhergehenden Ansprüche,
**dadurch gekennzeichnet,**
- **dass** der Kragen (7) konisch ist,
- **dass** die Buchse (3) einen ringförmigen Vorsprung (23) aufweist, der von der Kontaktfläche (5) eingefasst ist und der beim Ansetzen der Buchse (3) in die Bauteilöffnung (6) eindringt,
- **dass** der Vorsprung (23) eine umlaufende, der Kontaktfläche (5) zugewandte, ringförmig umlaufende Umfangsfläche (24) aufweist,
- **dass** die Umfangsfläche (24) zylindrisch ist,
- **dass** die Kontaktfläche (5) eben ist,
- **dass** das Andrücken der Buchse (3) so erfolgt, dass die Außenkante (19) an der Kontaktfläche (5) anliegt und die Innenkante (2) an der Umfangsfläche (24) anliegt.

13. Abgasanlagenkomponente mit wenigstens einem Bauteil (2), an dem wenigstens eine Buchse (3) mit dem Verfahren nach einem der vorhergehenden Ansprüche befestigt ist.

## Claims

1. A method for fastening a metallic bush (3) on a metallic structural part (2),
- in which a ring-shaped contact surface (5) is formed on the bush (3),
- in which a structural part opening (6) is formed on the structural part (2),
- in which a circumferential collar (7) along the structural part opening (6) is formed on the structural part (2) by forming an opening edge (26) surrounding the structural part opening (6), so that the collar (7) protrudes on a mounting side (8) of the structural part (2), which is provided for the applying of the bush (3),
**characterized in that** the collar (7) comprises a free-standing edge (18) located at an end of the collar (7) facing the bush (3) when the bush (3) is attached, wherein the free-standing edge (18) of the collar (7) before the applying of the bush (3) has a circumferential collar surface (21), which is delimited by a circumferential distal outer edge (19) with respect to the structural part opening (6), and a circumferential proximal inner edge (20) with respect to the structural part opening (6),
- wherein the bush (3) in the region of the structural part opening (6) is pressed against the mounting side (8) of the structural part (2) so that the contact surface (5) touches the front collar surface (21) or the distal outer edge (19) of the free-standing edge (18) of the collar (7), and
- the bush (3) is pressed against the structural part (2), so that the contact surface (5) lies against the free-standing edge (18) of the collar (7) under prestressing,
- in which a resistance welding is carried out, whilst the contact surface (5) lies in a pre-stressed manner against the free-standing edge (18) of the collar (7), so that bush (3) and structural part (2) are welded to one another in the region of the contact of contact surface (5) and collar (7).

2. The method according to claim 1,
**characterized in that**
the pressing-on of the bush (3) on the collar (7) takes place so that the collar (7) yields largely in a spring-elastic manner, in order to come to lie aganst the contact surface (5) in a largely closed manner in the circumferential direction.

3. The method according to claim 1 or 2,
**characterized in that**
for the structural part (2) at least in the region of the structural part opening (6) a wall thickness (27) is selected which is smaller than a wall thickness (28) of the bush (3) in an end region (29) having the contact surface (5).

4. The method according to one of claims 1 to 3,
**characterized in that**
the collar (7) is shaped so that it protrudes with a height (30) over the mounting side (8), which is at least as great as or greater than a wall thickness (27) of the structural part (2) in the region of the structural part opening (6).

5. The method according to one of claims 1 to 4,
**characterized in that**
the contact surface (5) is flat or tapered.

6. The method according to one of claims 1 to 5,
**characterized in that**
- the bush (3) has a through-opening (11), which in the welded-on state adjoins the structural part opening (6) and which defines a longitudinal centre axis (12) of the bush (3),
- the bush (3) has a coupling region (15) which adjoins the contact surface (5) on a side facing away from the structural part (2) and serves for the adding on of an add-on part (25).

7. The method according to claim 6,
**characterized in that**
- a circumferential path, along which the contact surface (5) runs in a ring-shaped manner, lies in a circumferential plane (16),
- the longitudinal centre axis (12) extends perpendicularly to the circumferential plane (16).

8. The method according to claim 6,
**characterized in that**
- a circumferential path, along which the contact surface (5) runs in a ring-shaped manner, lies in a circumferential plane (16),
- the longitudinal centre axis (12) is inclined with respect to the circumferential plane (16) in an angle range of 15° to 75°, preferably of 30° to 60°, in particular of 40° to 50°.

9. The method according to any one of the preceding claims,
**characterized in that**
- the collar surface (21) is flat or tapered, and/or
- the collar (7) is cylindrical or tapered.

10. The method according to any one of the preceding claims, **characterized in that**
the bush (3) has a ring-shaped projection (23) which is surrounded by the contact surface (5) and which during applying of the bush (3) penetrates into the structural part opening (6).

11. The method according to claim 10,
**characterized in that**
the projection (23) has a circumferential, ring-shaped circumferential surface (24), facing the contact surface (5), which circumferential surface is cylindrical or tapered.

12. The method according to any one of the preceding claims,
**characterized in that**
- the collar (7) is tapered,
- the bush (3) has a ring-shaped projection (23), which is surrounded by the contact surface (5) and which during applying of the bush (3) penetrates into the structural part opening (6),
- the projection (23) has a circumferential surface (24), facing the contact surface (5) and circumferential in a ring-shaped manner,
- the circumferential surface (24) is cylindrical,
- the contact surface (5) is flat,
- the pressing-on of the bush (3) takes place so that the outer edge (19) lies against the contact surface (5) and the inner edge (2) lies against the circumferential surface (24).

13. An exhaust gas system component with at least one structural part (2), on which at least one bush (3) is fastened by the method according to any one of the preceding claims.

## Revendications

1. Procédé de fixation d'une douille métallique (3) sur un composant métallique (2),
- dans lequel une surface de contact annulaire (5) est réalisée sur la douille (3),
- dans lequel une ouverture de composant (6) est réalisée sur le composant (2),
- dans lequel une collerette (7) s'étendant le long de l'ouverture de composant (6) est réalisée sur le composant (2) par déformation d'un bord d'ouverture (26) entourant l'ouverture de composant (6), de sorte que la collerette (7) fait saillie sur un côté de montage (8) du composant (2), qui est prévu pour la mise en place de la douille (3), et **caractérisé en ce que** la collerette (7) présente un bord libre (18) qui, lors de la mise en place de la douille (3), se trouve à une extrémité de la collerette (7) tournée vers la douille (3), dans lequel le bord libre (18) de la collerette (7) présente, avant la mise en place de la douille (3), une surface de collerette périphérique (21) qui est délimitée par un bord extérieur périphérique (19) distal en se référant à l'ouverture (6) du composant et par un bord intérieur périphérique (20) proximal en se référant à l'ouverture (6) du composant,
- dans lequel la douille (3) est pressée contre le côté de montage (8) du composant (2) dans la zone de l'ouverture de composant (6) de sorte que la surface de contact (5) touche la surface de collerette (21) du côté frontal ou l'arête extérieure distale (19) du bord libre (18) de la collerette (7),
- et dans lequel la douille (3) est pressée contre le composant (2), de sorte que la surface de contact (5) repose sous précontrainte contre le bord libre (18) de la collerette (7),
- dans lequel un soudage par résistance est effectué, pendant que la surface de contact (5) repose de manière précontrainte contre le bord libre (18) de la collerette (7), de sorte que la douille (3) et le composant (2) sont soudés l'un à l'autre dans la zone de contact de la surface de contact (5) et de la collerette (7).

2. Procédé selon la revendication 1,
**caractérisé en ce que**
la pression de la douille (3) sur la collerette (7) se fait de sorte que la collerette (7) cède en grande partie de manière élastique pour venir en appui contre la surface de contact (5) de manière largement fermée dans la direction périphérique.

3. Procédé selon la revendication 1 ou 2,
**caractérisé en ce que**
pour le composant (2), au moins dans la zone de l'ouverture de composant (6), une épaisseur de paroi (27) est choisie qui est inférieure à une épaisseur de paroi (28) de la douille (3) dans une zone d'extrémité (29) présentant la surface de contact (5).

4. Procédé selon l'une quelconque des revendications 1 à 3,
**caractérisé en ce que**
la collerette (7) est formée de telle sorte qu'elle fait saillie au-dessus du côté de montage (8) avec une hauteur (30) qui est au moins aussi grande ou plus grande qu'une épaisseur de paroi (27) du composant (2) dans la zone de l'ouverture de composant (6).

5. Procédé selon l'une quelconque des revendications 1 à 4,
**caractérisé en ce que**
la surface de contact (5) est plane ou conique.

6. Procédé selon l'une quelconque des revendications 1 à 5,
**caractérisé en ce que**
- la douille (3) présente une ouverture de passage (11) qui, à l'état soudé, se raccorde à l'ouverture de composant (6) et qui définit un axe médian longitudinal (12) de la douille (3),
- la douille (3) présente une zone de couplage (15) qui se raccorde à la surface de contact (5) sur un côté opposé au composant (2) et qui sert au montage d'un composant (25).

7. Procédé selon la revendication 6,
**caractérisé en ce que**
- une orbite, le long de laquelle la surface de contact (5) circule de manière annulaire, se trouve dans un plan de circulation (16),
- l'axe central longitudinal (12) s'étend perpendiculairement au plan de circulation (16).

8. Procédé selon la revendication 6,
**caractérisé en ce que**
- une orbite, le long de laquelle la surface de contact (5) circule de manière annulaire, se trouve dans un plan de circulation (16),
- l'axe central longitudinal (12) est incliné par rapport au plan de circulation (16) dans une plage angulaire de 15° à 75°, de préférence de 30° à 60°, en particulier de 40° à 50°.

9. Procédé selon l'une quelconque des revendications précédentes,
**caractérisé en ce que**
- la surface de collerette (21) est plane ou conique, et/ou
- la collerette (7) est cylindrique ou conique.

10. Procédé selon l'une quelconque des revendications précédentes,
**caractérisé en ce que**
la douille (3) présente une saillie annulaire (23) qui est bordée par la surface de contact (5) et qui pénètre dans l'ouverture (6) du composant lors de la mise en place de la douille (3).

11. Procédé selon la revendication 10,
**caractérisé en ce que**
la saillie (23) présente une surface périphérique (24) annulaire tournée vers la surface de contact (5), qui est cylindrique ou conique.

12. Procédé selon l'une quelconque des revendications précédentes,
**caractérisé en ce que**
- la collerette (7) est conique,
- la douille (3) présente une saillie annulaire (23) qui est bordée par la surface de contact (5) et qui pénètre dans l'ouverture (6) du composant lors de la mise en place de la douille (3),
- la saillie (23) présente une surface périphérique annulaire (24) s'étendant autour et tournée vers la surface de contact (5),
- la surface périphérique (24) est cylindrique,
- la surface de contact (5) est plane,
- la pression de la douille (3) se fait de sorte que le bord extérieur (19) repose sur la surface de contact (5) et que le bord intérieur (2) repose sur la surface périphérique (24).

13. Composant de système d'échappement avec au moins un élément de construction (2), sur lequel au moins une douille (3) est fixée par le procédé selon l'une quelconque des revendications précédentes.
